(19) Europäisches Patentamt
European Patent Office
Office européen des brevets

(11) **EP 4 102 436 A1**

(12) **EUROPEAN PATENT APPLICATION**
published in accordance with Art. 153(4) EPC

(43) Date of publication:
**14.12.2022 Bulletin 2022/50**

(21) Application number: **21750628.6**

(22) Date of filing: **29.01.2021**

(51) International Patent Classification (IPC):
**G06Q 30/02** *(2012.01)*

(52) Cooperative Patent Classification (CPC):
**G06Q 30/02**

(86) International application number:
**PCT/JP2021/003211**

(87) International publication number:
**WO 2021/157474 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.02.2020 JP 2020019533**

(71) Applicant: **Dentsu Inc.**
**Tokyo 105-7001 (JP)**

(72) Inventors:
• **KISHIMOTO, Wataru**
**Tokyo 105-7001 (JP)**
• **ARAKAWA, Dai**
**Tokyo 105-7001 (JP)**
• **AKINO, Rina**
**Tokyo 105-7001 (JP)**
• **OAKS, Sei-ichi**
**Tokyo 105-7001 (JP)**
• **KOBAYASHI, Risa**
**Tokyo 105-7001 (JP)**
• **CHOSA, Shinji**
**Tokyo 105-7001 (JP)**

(74) Representative: **SSM Sandmair**
**Patentanwälte Rechtsanwalt**
**Partnerschaft mbB**
**Joseph-Wild-Straße 20**
**81829 München (DE)**

(54) **ADVERTISEMENT MATERIAL ALLOCATION SYSTEM, ADVERTISEMENT MATERIAL ALLOCATION DEVICE, AND PROGRAM**

(57) To propose efficient advertisement allocation to particular targets. An advertising material allocation system according to one aspect of the present disclosure includes: an acquisition unit configured to acquire an acquired target rating point (TRP) of each advertisement frame and restriction information about allocation of each advertisement frame; and a control unit configured to decide an advertising material for a particular target to be allocated to each advertisement frame, based on the acquired TRP and the restriction information.

FIG. 2

DECIDE ALLOCATION TARGET — S101

DECIDE TARGET TRP FOR EACH TARGET — S102

DERIVE PREDICTED AUDIENCE RATING (PREDICTED ACQUIRED TRP) FOR EACH ADVERTISEMENT FRAME — S103

ACQUIRE ALLOCATION RESTRICTIONS ABOUT EACH ADVERTISEMENT FRAME AND THE LIKE — S104

PERFORM ALLOCATION — S105

EP 4 102 436 A1

**Description**

[Technical Field]

The present disclosure relates to an advertising material allocation system, an advertising material allocation apparatus and a program.

[Background Art]

In television broadcast, CMs (commercial messages) are broadcast as advertisements. The CMs are roughly classified into time CMs and spot CMs. The time CMs are CMs broadcast in slots that are bought and sold being integrated with a program and may be called program commercial messages, program CMs or sponsor CMs.
The spot CMs correspond to CMs broadcast in CM time slots determined by television stations. The spot CMs are classified into station breaks (SB) broadcast between programs, participations (PT) (or participating CMs) inserted in a program but are not attached with a sponsor display, and the like.
Existing spot CM planning (which may also be called advertisement frame selection, drafting, buying, estimation, spot planning, allocation or the like) is performed based on an advertisement manuscript pattern specified in advance (for example, Patent Literature 1).

[Citation List]

[Patent Literature]

[Patent Literature 1] Japanese Patent Laid-Open No. 2000-124867

[Summary of the Invention]

[Technical Problem]

There are some products and services that are required only to appeal to a particular target. Here, the target may be any of classifications by sex/age used in the field of marketing (the C (child) group, the T (teen) group, the M (male) 1 to M3 groups and the F (female) 1 to F3 groups) but are not limited thereto.
Even if an advertising material allocation targeting all generations is used for such a product, it is not effective. Therefore, it is desirable to introduce advertising material allocations for particular targets into CMs. Further, it is desirable to, for the same product or the like, properly use advertising material allocations for a plurality of targets.
As for a method for allocating advertising material allocations for particular targets, however, consideration of the method has not progressed so far. There is a problem that, unless such a method is clarified, a more effective advertising effect cannot be obtained for particular targets and, therefore, for each target.
Therefore, one of objects of the present disclosure is to provide an advertising material allocation system capable of proposing efficient advertisement allocation to particular targets, an advertising material allocation apparatus and a program.

[Solution to Problem]

An advertising material allocation system according to one aspect of the present disclosure includes: an acquisition unit configured to acquire an acquired target rating point (TRP) of each advertisement frame and restriction information about allocation of each advertisement frame; and a control unit configured to decide an advertising material for a particular target to be allocated to each advertisement frame, based on the acquired TRP and the restriction information.

[Advantageous Effect of Invention]

According to one aspect of the present disclosure, it is possible to propose efficient advertisement allocation to particular targets.

[Brief Description of Drawings]

[Figure 1] Figure 1 is a diagram showing an example of a schematic configuration of an advertising material allocation system according to an embodiment.

[Figure 2] Figure 2 is a diagram showing an example of a flowchart of an advertising material allocation method according to the embodiment.

[Figure 3] Figure 3 is a diagram showing an example of a target TRP for each target.

[Figure 4] Figures 4A and 4B are diagrams showing examples of virtual time.

[Figure 5] Figure 5 is a diagram showing an example of derivation of an expected acquired TRP.

[Figure 6] Figure 6 is a diagram showing an example of specification of prohibited time for each target for a certain campaign.

[Figure 7] Figure 7 is a diagram showing an example of specification of prohibited time for each target for a certain campaign.

[Figure 8] Figure 8 is a diagram showing an example of a functional configuration of an allocation apparatus according to the embodiment.

[Figure 9] Figure 9 is a diagram showing an example of a hardware configuration of the allocation apparatus and the like according to the embodiment.

[Description of Embodiment]

An embodiment of the present disclosure will be described below in detail with reference to accompanying drawings. In the description below, the same units are given the same reference numerals. Since the same units have the same name and the same function, detailed description will not be repeated.

(Advertising material allocation system)

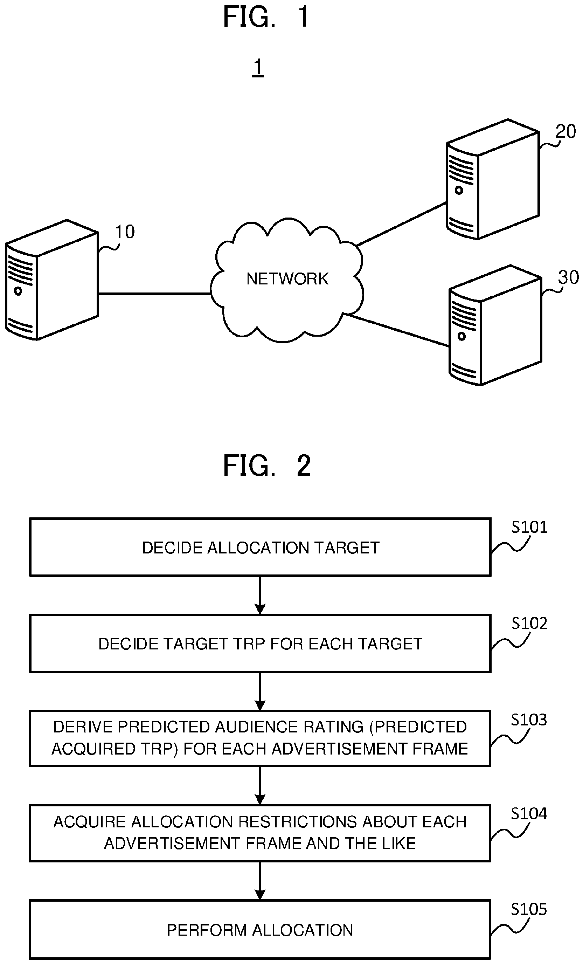

Figure 1 is a diagram showing an example of a schematic configuration of an advertising material allocation system according to an embodiment. An advertising material allocation system 1 shown in Figure 1 includes an advertising material allocation apparatus 10, a broadcast distribution apparatus 20 and an audience rating management apparatus 30.

The advertising material allocation apparatus 10 is an apparatus that, for one or more advertisement campaigns (which may be replaced with brands, products, services, materials or the like), allocates CMs to advertisement frames to be broadcast using television or the like. The advertising material allocation apparatus 10 will also be simply called the allocation apparatus 10 or the like.

The allocation apparatus 10 may be a mobile terminal (a mobile communication terminal) such as a mobile phone, a smartphone or a tablet-type terminal or may be a fixed communication terminal such as a personal computer (PC) or a server. In other words, the allocation apparatus 10 in the present disclosure can be replaced with a communication device.

The allocation apparatus 10 may communicate with a network (such as the Internet) wiredly and/or wirelessly (for example, LTE (Long Term Evolution), 5G NR (5th Generation New Radio), Wi-Fi (registered trademark) and the like).

The broadcast distribution apparatus 20 is an apparatus to distribute broadcast to TVs (televisions). Here, each television (television receiver) may be an apparatus having a function of receiving at least one of terrestrial broadcast, broadcasting by BS (broadcasting satellite)/CS (communications satellite), Internet broadcasting (Internet television) and the like. For example, the television may be at least one of a multi-function television, a smart TV, an IP (Internet protocol) TV, a set top box, the mobile terminal described above, the fixed communication terminal described above and the like.

Note that broadcasting means transmission of telecommunication intended to be directly received by the public, and may include radio broadcasting and Internet broadcasting.

The audience rating management apparatus 30 is an apparatus to aggregate actual audience ratings of a program broadcast on televisions. An audience rating may be stored in a certain time unit (for example, seconds, minutes or hours). The audience rating management apparatus 30 may transmit information about the audience rating to another apparatus (for example, the allocation apparatus 10) via a network.

The audience rating management apparatus 30 may be, for example, an apparatus managed by a television audience rating surveyor. The audience rating management apparatus 30 may acquire viewing history data from pieces of measuring equipment connected to televisions of certain households (for example, survey cooperation households) and manage the viewing history data. Note that an audience rating may be calculated or predicted from the data.

In the audience rating management apparatus 30, for each certain target (users corresponding to a certain attribute), an audience rating (a personal audience rating of the target) of may be recorded.

An audience rating or a predicted audience rating may include, for example, an audience rating or a predicted audience rating about at least one of TRP (target rating point) corresponding to a total of personal audience ratings of a target group and GRP (gross rating point) corresponding to a total of household audience ratings. Further, the predicted audience rating may include an audience rating predicting an audience rating which is an all individual audience rating and which is obtained by adding up a real-time audience rating and time-shift audience ratings for seven days after broadcast (the audience rating may be called ALL, P+C7 (program+commercial 7) or the like). Note that the personal audience rating of a certain target may mean a rate of an audience of the target group relative to all individuals corresponding to the target group.

Note that, in the present disclosure, targets are assumed to correspond to classifications by sex/age used in the field of marketing (the C (child) group, the T (teen) group, the M (male) 1 to M3 groups and the F (female) 1 to F3 groups) but are not limited to the classifications.

Examples of a functional configuration and a hardware configuration of each of the apparatuses such as the allocation apparatus 10 will be described later.

Note that the system configuration is a mere example, and the system configuration is not limited thereto. For example, though a configuration in which one apparatus is included for each kind is adopted in Figure 1, the number of apparatuses for each kind is not limited to one, but a plurality of apparatuses may exist. The advertising material allocation system 1 may be configured such that a part of the apparatuses are not included or may be configured such that functions of one apparatus is realized by a plurality of apparatuses.

A configuration is also possible in which functions of a plurality of apparatuses are realized by one apparatus. For example, at least two of the allocation apparatus 10, the broadcast distribution apparatus 20 and the audience rating management apparatus 30 may be implemented on one server.

(Advertising material allocation method)

An advertising material allocation method according to the embodiment of the present disclosure will be described below. Each advertising material allocation method may be applied to the advertising material allocation system described above. Note that the content of the present disclosure may be used for advertising material planning, and, in the present disclosure, "allocation", "planning", "drafting" and the like may be replaced with one another.

Figure 2 is a diagram showing an example of a flowchart of the advertising material allocation method according to the embodiment.

At step S101, the allocation apparatus 10 decides a campaign to be an advertising material allocation target. The allocation apparatus 10 may decide the campaign based on an input from the outside (for example, settings by a user). The allocation target may include a plurality of campaigns.

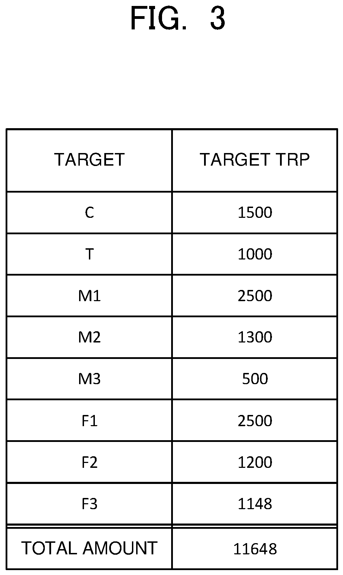

At step S102, the allocation apparatus 10 decides a target TRP for each target for each campaign. Figure 3 is a diagram showing an example of the target TRP for each target. Target TRPs for the targets may be the same value or may be different values. In the present disclosure, "target TRP" may be replaced with "target GRP".

At step S103, the allocation apparatus 10 derives a predicted audience rating (a predicted acquired TRP) for each advertisement frame during a period (for example, one month) during which a certain campaign is performed. For the derivation, past audience rating data (for example, personal audience rating data for each target) recorded in the audience rating management apparatus 30 may be used. The allocation apparatus 10 may derive the predicted acquired TRP, for example, by creating a TRP prediction model using an analysis method such as deep learning and regression analysis, based on the past audience rating data and inputting program information corresponding to each advertisement frame to the model. Note that, in the present disclosure, "predicted acquired TRP", "acquired TRP", and "predicted TRP" may be replaced with one another.

In the present disclosure, it is assumed that advertisement frames to be allocation targets are frames of a plurality of broadcasting stations (which can be replaced with "channels"), which correspond to a certain period (for example, a campaign period). However, one broadcasting station may be targeted. Note that, in the present disclosure, "advertisement frame" may be replaced with "time slot", "zone" or the like.

At step S104, the allocation apparatus 10 acquires allocation restrictions about each advertisement frame (prohibition conditions and the like about each target), setting information and the like. The allocation apparatus 10 may acquire the restrictions, the setting information and the like based on an input from the outside (for example, settings by the user and reception from another apparatus).

Here, the setting information may include information about an advertisement to be allocated (which may also be called advertisement information, CM information or the like). The advertisement information may include information about content of the advertisement and may show, for example, content of an advertisement target product or service (for example, about whether or not the product or service relates to a medical system, gambling, financing, alcohol, tobacco or the like).

Further, the advertisement information may include information about whether the advertisement of the campaign in the frame is a time CM or a spot CM. The advertisement information may include information about whether the advertisement of the campaign in the frame is SB or PT.

Further, the advertisement information may include information about a manuscript pattern of the advertisement allowed for the campaign (for example, an inverted L type, an all-day type, an inverted E type, an inverted C-shaped type, an inverted F type, a midnight type, an all-daytime type or the like).

The setting information may include information about a program (which may also be called program information). The program information may include, for example, a broadcast date and time (start time, end time, a day of the week, a time length of the program and the like may be included), a time rank (a CM fee rank), a genre of the program, information about content of the program, keywords about the program, a predicted audience rating of the program and the like.

The genre of the program may be, for example, news, entertainment show, drama, movie, music, sports, others or the like. The predicted audience rating may include a predicted audience rating (or an estimated audience rating) calculated based on at least one of a real-time audience rating and a time-shift audience rating.

As for the restrictions, the allocation apparatus 10 may judge whether a certain campaign can acquire a certain advertisement frame (whether or not to allocate an advertisement for the certain campaign to the certain advertisement frame) based on at least one of the following:

- whether the advertisement frame is a spot frame;
- whether the advertisement frame is an SB or a PT if the advertisement frame is a spot frame;
- whether the advertisement frame is a time frame;
- a program corresponding to the advertisement frame;
- the genre of the program corresponding to the advertisement frame;
- the number of advertisement frames acquired within a certain period (for example, the same day, the same month or a campaign period) for the program corresponding to the advertisement frame;
- a broadcasting station corresponding to the advertisement frame;
- a day of the week and/or a time slot of the advertisement frame;
- whether frames adjacent to the advertisement frame have been acquired or not;
- whether an advertisement frame for the same genre as the campaign has been acquired in the same frame as the advertisement frame or not; and
- whether the advertisement frame is a frame specified as a frame that cannot be acquired for the campaign (a sponsor or a client of the campaign).

In other words, the allocation apparatus 10 may assume that such an advertisement frame that at least one of the above conditions matches (or does not match) settings for the campaign is a frame that is prohibited to be acquired (that cannot be acquired) for the campaign. The above conditions may also be called prohibition conditions or the like.

A day of the week and/or a time slot when an advertisement frame cannot be acquired may be called prohibited time.

For example, such a campaign will be considered that time from 9:00 to 10:00 is set as prohibited time, and acquisition of an SB frame is set impossible for 9:00 and possible for 10:00. For the campaign, the allocation apparatus 10 may judge that acquisition of a PT frame that starts at 8:30 and ending at 9:00 is possible, acquisition of a PT frame that starts at 8:30 and ends at 9:30 is impossible, acquisition of a PT frame that starts at 10:00 and ends at 10:30 is possible, acquisition of an SB frame at 9:00 is impossible, and acquisition of an SB frame at 10:00 is possible.

The allocation apparatus 10 may derive the prohibited time based on a manuscript pattern of an advertisement. As manuscript patterns, there are, for example, an inverted L type, an all-day type, an inverted E type, an inverted C-shaped type, an inverted F type, a midnight type, an all-daytime type or the like. The allocation apparatus 10 may judge that, for a campaign for which the inverted L type manuscript pattern is set as a frame that is prohibited to be acquired, time corresponding to the inverted L type is prohibited time. Note that, in the present disclosure, "advertisement manuscript pattern" may be replaced with "manuscript pattern", "development pattern", "advertisement pattern", "sales pattern" or the like.

Note that the allocation apparatus 10 may judge that an advertisement frame having a time slot that overlaps with prohibited time even partially is a frame prohibited to be acquired, or may judge that even an advertisement frame having a time slot that partially overlaps with prohibited time can be acquired depending on the rate of the overlapped part. A rate threshold to judge being prohibited to be acquired may be called a rate of prohibited time included. The allocation apparatus 10 may judge an advertisement frame with a rate of the part overlapping with prohibited time equal to or larger than the rate of prohibited time included as a frame that cannot be acquired.

For example, consideration will be made on a case where the rate of prohibited time included is set to 66.6% for prohibited time from 9:00 to 10:00. In this case, for a PT frame that starts at 8:30 and ends at 9:30, time overlapping with prohibited time/time of the whole frame=30 minutes/60 minutes=50%, and, therefore, the allocation apparatus 10 may judge that the frame can be acquired. On the other hand, for a PT frame that starts at 8:45 and ends at 9:30, time overlapping with prohibited time/time of the whole frame=30 minutes/45 minutes=66.6%, and, therefore, the allocation apparatus 10 may judge that the frame cannot be acquired.

As for "whether frames adjacent to the advertisement frame have been acquired or not" described above, if a difference between start time of a certain advertisement frame and end time of another advertisement frame is equal to or smaller than (or below) a predetermine threshold, or if a difference between end time of a certain advertisement frame and start time of another advertisement frame is equal to or smaller than (or below) the predetermine threshold, these advertisement frames may be expressed as "being adjacent". The certain threshold may be called adjacency time limit.

A range of time slots of a certain day of the week may be called "a zone", "an advertisement frame set", "a frame group" or the like. If a prohibition condition about adjacency is specified, the allocation apparatus 10 may limit the number of frames acquired in a zone based on the adjacency time limit. Note that the number of frames acquired in a zone may be the number of frames acquired corresponding to spot frames, time frames or a total of these.

The number of advertisement frames that can be acquired in a zone for a certain day of the week may be determined by floor (time of the zone/adjacency time limit)-1 or determined by floor (time of the zone/adjacency time limit). Here, floor(x) means a floor function of x.

For example, when the adjacency time limit=30 minutes is applied to a zone that starts at 16:00 and ends at 19:00, the allocation apparatus 10 may judge that the number of advertisement frames that can be acquired in the zone is 180/30-1=5.

Note that "adjacency" may be judged based on the start/end times of advertisement frames as described above or may be judged based on virtual times instead of the start/end times or together with the start/end times. Here, the virtual times may mean virtual times used to judge a limit to adjacency.

For example, the allocation apparatus 10 may calculate virtual time for a certain advertisement frame by Formula 1 below:

$$\text{virtual time} = \text{start time of the advertisement frame} + \text{length(time length) of the advertisement frame} \times \{(2 \times \text{sequence number of the same frames}) - 1\} / (2 \times \text{the number of the same frames})$$ (Formula 1)

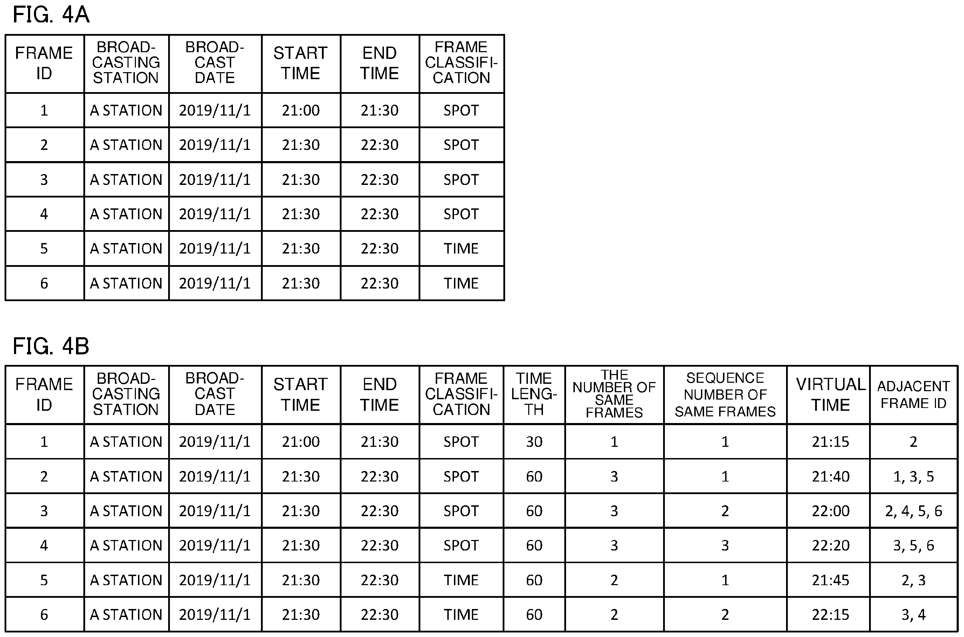

Figures 4A and 4B are diagrams showing examples of the virtual times. Figure 4A shows an outline of six frames which explanation will be on the assumption of. A frame ID (identifier) is an ID (a number) to distinguish a frame, and frame IDs 1 to 6 are shown in Figure 4A. A frame classification indicates whether spot or time. In this example, a frame with the frame ID 1 does not include other advertisement frames in the same frame (an advertisement frame one or both of start time and end time of which are in the same frame).

On the other hand, the frame IDs 2 to 4 correspond to the same frame. Further, the frame IDs 5 and 6 correspond to the same frame. As described above, the same frames may include only frames of the same frame classification.

Figure 4B shows a result of deriving adjacent frames of the six frames in Figure 4A. A time length may be obtained by subtracting start time from end time. The time length for the frame ID 1 is 30 minutes, and the time length for the frame IDs 2 to 6 is 60 minutes.

The number of the same frames is 1 for the frame ID 1, 3 for the frame IDs 2 to 4, and 2 for the frame IDs 5 and 6.

A sequence number of the same frames is a number to distinguish frames included in the same frames. In this example, numbers 1, 2, ... are allocated in ascending order frame IDs. However, the sequence number is not limited thereto.

The allocation apparatus 10 determines the virtual time for the frame IDs 1 to 6 as 21:15, 21:40, 22:00, 22:20, 21:45 and 22:15, respectively. The allocation apparatus 10 may judge that, if a difference between two virtual times is equal to or smaller than (or below) the adjacency time limit, frames with frame IDs corresponding thereto are adjacent to each other.

In the example of Figure 4B, the allocation apparatus 10 assumes that the adjacency time limit=30 minutes is set. In this case, an ID of a frame adjacent to a frame with a certain frame ID is as shown in Figure 4B. For example, for the frame ID 3, all virtual time differences between the frame ID 3 and the frame IDs 2, 4, 5 and 6 are equal to or smaller than the adjacency time limit. Therefore, in an adjacent frame ID field for the frame ID 3, "2, 4, 5, 6" is written.

Note that the allocation apparatus 10 may not use virtual time for at least time frames or spot frames. When virtual time is not used for a certain frame, "adjacency" of the frame may be judged using start time and end time of the frame. Further, for a frame included in a particular zone (or time slot), the approval apparatus 10 may not use virtual time or may perform control to always use virtual time. The allocation apparatus 10 may judge whether or not to use virtual time for at least time frames or spot frames based on setting information.

At step S105, the allocation apparatus 10 performs allocation of advertising materials for each campaign, based on the target TRP of S102, the acquired TRP of S103, the restrictions of S104 or the like. In the allocation, it is preferable that the acquired TRP for each target after the allocation exceeds the target TRP, and a total acquired TRP after the allocation is maximized as far as possible.

The allocation apparatus 10 may perform the allocation using one or more optimization methods. The optimization methods may be, for example, a hill climbing method, a simulated annealing method, a quantum annealing method, a genetic algorithm method and the like. For the optimization, a learning model generated based on at least one of deep learning, reinforcement learning, machine learning and the like may be used. Note that, multi-start local search (MSLS) may be applied to each of optimization method.

In the case of using the hill climbing method, the simulated annealing method and the like for a plurality of campaigns, the allocation apparatus 10 may repeat a step of selection of a campaign with the lowest achievement rate→implementation of frame allocation to the campaign to perform allocation, so that the target value for each campaign is achieved. When there are more than one campaign with the lowest achievement rate, a campaign with the largest target value may be selected as a frame allocation target.

Here, the target value may be an amount of money, GRP, TRP, Reach, frequency or the like. The achievement rate may be derived based on at least one or both of a budget achievement rate and an achievement rate for a maximum efficiency value (for example, a weighted average of both). Though description will be made on the assumption that the target value is a TRP in the present disclosure, the target value is not limited thereto.

For example, the achievement rate may be determined by: achievement rate=(acquired TRP+expected acquired TRP)/target TRP. Here, the expected acquired TRP may be determined by: expected acquired TRP=$\Sigma_{\text{each frame}}$ (TRP of frame/the number of campaigns for which the frame can be acquired).

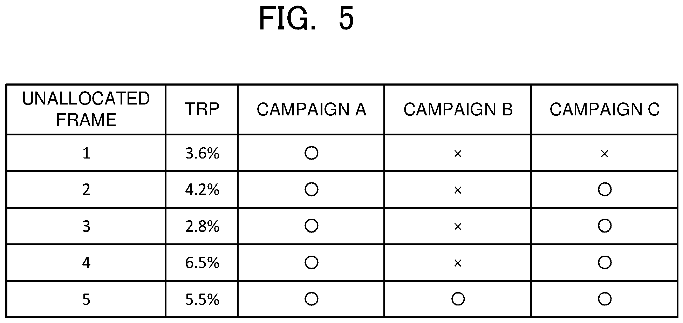

Figure 5 is a diagram showing an example of derivation of an expected acquired TRP. In this example, explanation will be made on a case where there are unallocated frames 1 to 5 for three campaigns (campaigns A, B and C). A frame that can be acquired for each campaign is indicated by "○", and a frame that cannot be acquired due to prohibition conditions, an adjacency limit or the like is indicated by "×".

The number of campaigns that can acquire a frame is 1 for the unallocated frame 1 (because ○ is given only for the campaign A), 2 for the unallocated frames 2 to 4, and 3 for the unallocated frame 5.

Therefore, for the unallocated frames 1 to 5, the expected acquired TRP for the campaign A can be determined as (3.6/1)+(4.2/2)+(2.8/2)+(6.5/2)+(5.5/3)≈12.2. Similarly, the expected acquired TRP for the campaign B can be determined as (5.5/3)≈1.83. Similarly, the expected acquired TRP for the campaign B can be determined as (4.2/2)+(2.8/2)+(6.5/2)+(5.5/3)≈8.6.

The degree of achievement of the maximum efficiency value may be based on TRP Max which is an indicator to acquire a time frame with the highest target TRP among all candidate frames or based on CPRP Min which is an indicator to acquire a time frame with the smallest CPRP (cost per TRP).

The allocation apparatus 10 may determine an evaluation value of a solution of an optimization result, for example, based on an evaluation value calculated by Formula 2 below. The allocation apparatus 10 may determine the evaluation value of the solution of the optimization result by calculating the evaluation value calculated by Formula 2 by number of seconds of brand (campaign) and weighted-averaging the evaluation values by the number of brands for each number of seconds.

(Formula 2)

$$\text{Evaluation value} = \sqrt{\sum_i f1(\text{Brand}_i)^{w1} \times \sum_i f2(\text{Brand}_i)^{w2}} \times \min_i(\text{Target achievement rate by period}(\text{Brand}_i))^{\text{Lowest achievement rate Weight}}$$

Here, f1 (Brand$_i$) and f2 (Brand$_i$) may be functions corresponding to an optimization indicator of the i-th brand, respectively, and may be, for example, functions corresponding to at least one of reach max (an indicator to, by holding reaches corresponding to acquired time frames for each brand and calculating a reach for each of all candidate frames when the candidate frame is acquired, acquire a time frame with the best reach), CPR Min (an indicator to, by calculating CPR (cost per reach) in the case of having acquired a brand for each of all candidate frames, acquire a time frame corresponding to the smallest CRP), TRP Max, THR Max (an indicator to, by calculating THR (target hold rate) in the case of having acquired the THR for each of all candidate frames, acquire a time frame corresponding to the largest THR) and the like.

Here, w1 and w2 may be weighting factors that satisfy the relationship of w1+w2=1.0. When only one optimization indicator is set, the allocation apparatus 10 may assume f2=0 and w1=1.0 in Formula 2. When two optimization indicators are set, the allocation apparatus 10 may assume that f1 and f2 in Formula 2 correspond to the indicators, respectively. Note that target achievement rates by period may correspond to values of the achievement rates described above by brand period. The lowest achievement rate Weight may be a suitable weighting factor and may correspond, for example, to a certain real number.

The allocation apparatus 10 may judge the optimal solution based on the above evaluation value and decide an advertising material to be allocated to a certain advertisement frame.

When, for an advertisement for a certain campaign, there is a different material for each target, and a material for a certain target is allocated to a certain advertisement frame in the above-stated calculation related to optimization, the allocation apparatus 10 may assume that the advertisement frame does not have an advertising effect on other targets at all (the advertisement frame is regarded as having an effect of TRP=certain value on the target, but TRP=0 is assumed for the other targets), or has a reduced advertising effect on the other targets (the advertisement frame has an effect of TRP corresponding to a certain value on the target, but TRP=certain value×coefficient (here, coefficient<1) is assumed for the other targets). Note that "a material for a certain target" may means "a material for one or more targets".

Note that the prohibited time described above may be set different for each target. When a certain advertisement frame is set as being prohibited to be acquired, for a certain target, the allocation apparatus 10 may perform control so that a material for the target is not allocated to the advertisement frame in the above-stated calculation related to optimization (for example, in the optimization method, trial to allocate a material for the certain target to the advertisement frame that is prohibited to be acquired by the target may be skipped).

Note that, at the allocation process of step S105 to maximize the TRP for each target, the allocation apparatus 10 may decide a maximum quantity of advertisement frames to be allocated to each target, based on a target GRP (a total quantity of advertisement frames to be acquired) which is a total of GRPs of advertisement frames. For example, when it is given that the target GRP is 1,000 for a campaign the target of which is the M1 group, the allocation apparatus 10 may perform such control that an acquired TRP for the M1 group is maximized within a range that the total quantity of advertisement frame to be acquired does not exceed 1,000 GRP. A target GRP to limit such a maximum quantity of advertisement frames may be set for the allocation apparatus 10.

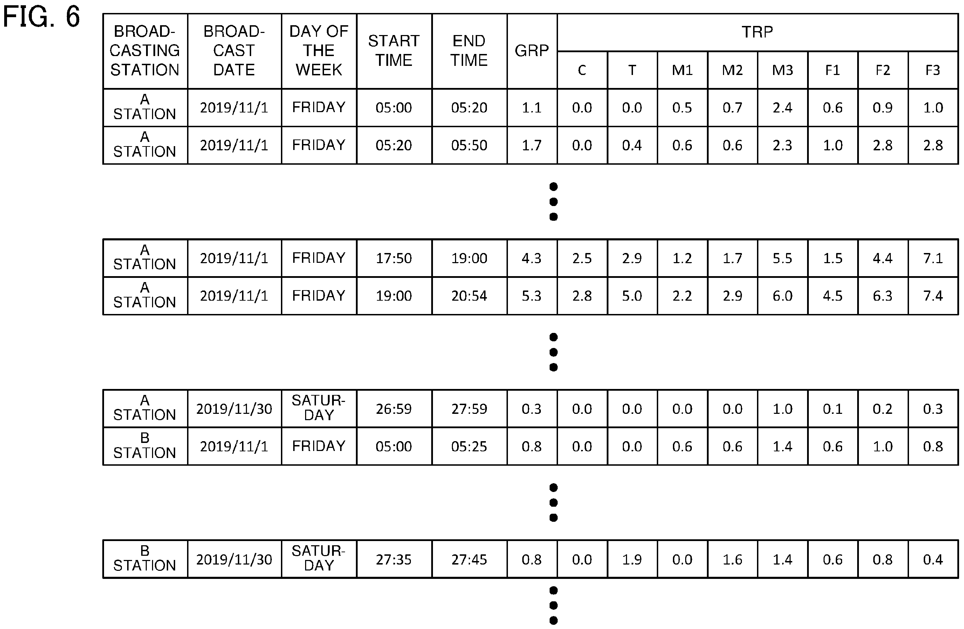

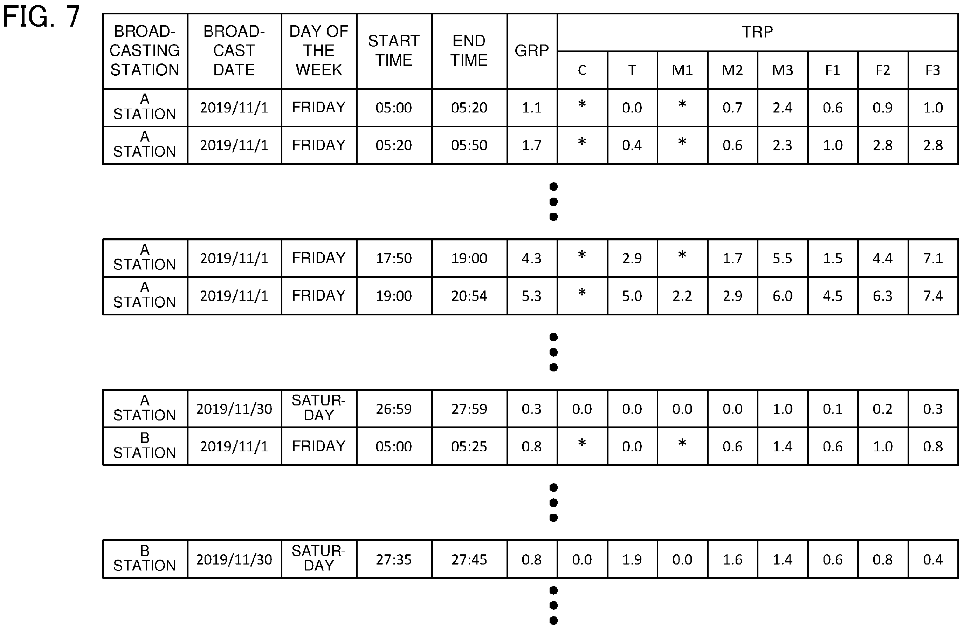

Figures 6 and 7 are diagrams showing examples of specification of prohibited time for each target for a certain campaign. Figure 6 is a table in which GRPs, TRPs and the like for advertisement frames in time slots of each day of the week in a certain month (November 2019) for each of broadcasting stations (A Station, B Station, ...) are enumerated. The allocation apparatus 10 may manage information to be shown on the table based on program information, audience rating information and the like received from the audience rating management apparatus 30 and the like.

Figure 6 shows a table when there are no particular restrictions. In this case, since the allocation apparatus 10 can try allocation of an arbitrary target to each advertisement frame, the degree of freedom is high.

Figure 7 shows a table corresponding to Figure 6 when there are some restrictions. In Figure 7, for such a target that the value of TRP is indicated by "*" for a certain advertisement frame, the advertisement frame is set as being prohibited to be acquired. In this example, in this campaign, the C group is excluded from targets for all broadcasting stations from November 1 to November 14. Further, in this campaign, the manuscript pattern of the M1 group during the whole period is set to the inverted L type (for example, acquisition is possible only after 19:00 on weekdays, and all day on Saturdays, Sundays and holidays) for all the broadcasting stations.

The allocation apparatus 10 may judge that the value of the acquired TRP corresponding to "*" as a negative number (for example, minus infinity). In this case, it is possible to suppress the possibility of the allocation apparatus 10 acquiring a frame set as being prohibited to be acquired.

The allocation apparatus 10 may allocate, after acquiring a set of advertisement frames that can be allocated for each campaign, allocate a material for each target in the set, or may decide the set of advertisement frames to be allocated for each campaign while considering which material for which target is to be allocated to which advertisement frame.

Note that an advertisement frame that can be acquired only for a campaign that has acquired frames corresponding to a certain amount of money may be set for a particular zone. Such an advertisement frame may be called a feature frame, a privilege frame or the like. The allocation apparatus 10 may judge that, for a certain campaign, it is prohibited to acquire the feature frame until acquired advertisement frames exceed a corresponding certain amount of money. The certain amount of money may be called a feature frame unit price.

For example, consideration will be made on a case where the unit price of a feature frame 1 from 19:00 to 23:00 on Monday to Friday is 200×n (n≥1)×10,000 yen, and the unit price of a feature frame 2 from 18:00 to 23:00 on Saturday is 250×n (n≥1)×10,000 yen.

When, for a certain campaign, 2 million yen is exceeded in total in a process of acquiring one or more advertisement frames, the allocation apparatus 10 may judge that a feature frame 1 can be acquired from the next acquisition process. When, for a certain campaign, 2.5 million yen is exceeded in total in the process of acquiring one or more advertisement frames, the allocation apparatus 10 may judge that a feature frame 2 can be acquired from the next acquisition process.

When, for a certain campaign, 4 million yen is exceeded in total in the process of acquiring one or more advertisement frames, the allocation apparatus 10 may judge that a new feature frame 1 can be acquired from the next acquisition process. When, for a certain campaign, 5 million yen is exceeded in total in the process of acquiring one or more advertisement frames, the allocation apparatus 10 may judge that a new feature frame 2 can be acquired from the next acquisition process. Thus, when a plurality of feature frame unit prices are defined for advertisement frames (or zones), a certain campaign may additionally obtain a right to acquire a feature frame each time the cost required for acquiring an advertisement for the campaign exceeds a unit price.

The allocation apparatus 10 may acquire which zone a feature frame corresponds to, how much the feature frame unit price is, and the like based on an input from the outside (for example, settings by the user).

The allocation apparatus 10 may decide a preferable advertisement manuscript (for example, distribution of budget to broadcasting stations, an advertisement manuscript pattern, a material to be broadcast in each advertisement frame, and the like) by implementing steps S101 to S105. The allocation apparatus 10 may transmit control information for broadcasting a CM to the broadcast distribution apparatus 20 based on the decided advertisement manuscript.

According to the embodiment described above, it is possible to preferably decide highly efficient allocation of CMs to targets.

<Others>

As for the advertising material allocation shown in the embodiment described above, an example of applying the allocation to television CMs is shown, but advertising material allocation is not limited thereto. The above embodiment of the present disclosure may be applied, for example, to radio CMs, Internet distribution CMs and the like. One skilled in the art can replace and understand the description of the embodiment described above as necessary. For example, in the case of the embodiment being applied to radio CMs, audience rating in the present disclosure may be replaced with listening rate.

Similarly to the prohibition conditions, the prohibited time and the like described in the above embodiment, conditions (conditions to make acquisition possible), time (time that can be acquired) and the like for such an advertisement frame that at least one of the conditions matches (or does not match) settings for a campaign to be assumed to be possibly acquired for the campaign may be set for the allocation apparatus 10. One skilled in the art can appropriately replace the prohibition conditions/prohibited time described above with conditions to make acquisition possible/time that can be acquired and implement an aspect in which the conditions to make acquisition possible/time that can be acquired are introduced, based on content in which "acquisition is impossible" and "acquisition is possible" are appropriately replaced.

Further, "audience rating", "GRP", "TRP" and the like in the present disclosure may be replaced with one another and may be replaced with other indicators about the audience rating or the gross rating.

Note that the present disclosure covers content in which "audience rating" is replaced with a particular indicator (or the degree of improvement, an offset and the like of the particular indicator). The particular indicator may be an indicator to judge an advertising effect, an intermediate indicator to improve a sponsor's key performance indicators (KPI) or the like, and, may include, for example, a recognition rate, Reach, ROAS (return on advertising spend), ROI (return on investment) and the like. At least a part of expressions of "audience rating" may be replaced with any of the particular indicators described above.

(Configuration of apparatus)

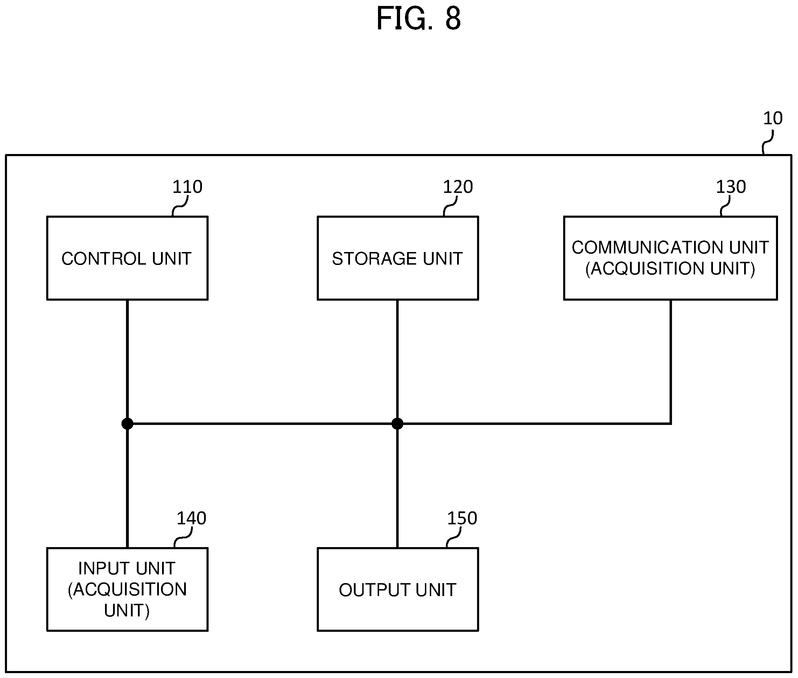

Figure 8 is a diagram showing an example of a functional configuration of an allocation apparatus according to the embodiment. As shown in this example, the allocation apparatus 10 has a control unit 110, a storage unit 120, a communication unit 130, an input unit 140 and an output unit 150. Note that functional blocks of characteristic parts in the present embodiment are mainly shown in this example, and the allocation apparatus 10 may have other functional blocks required for other processes. Further, a configuration in which a part of the functional blocks are not included may be adopted.

The control unit 110 performs control of the allocation apparatus 10. The control unit 110 can be configured with a controller, a control circuit or a control device that is described based on common recognition in the technical field of the present disclosure.

The storage unit 120 stores (holds) information used in the allocation apparatus 10. The storage unit 120 can be configured with a memory, a storage, a storage device or the like that is described based on common recognition in the technical field of the present disclosure.

The communication unit 130 performs communication with other communication devices (equipment, servers and the like) via a network. The communication unit 13 may output received various information to the control unit 110.

The communication unit 130 can be configured with a transmitter/receiver, a transmission/reception circuit or a transmission/reception device that is described based on common recognition in the technical field of the present disclosure. Note that the communication unit 130 may be configured with a transmission unit and a reception unit.

The input unit 140 accepts an input by an operation from the user. Further, the input unit 140 may be connected to certain equipment, a storage medium and the like to accept input of data. The input unit 140 may output an input result, for example, to the control unit 110.

The input unit 140 can be configured with an input device such as a keyboard, a mouse, buttons and the like, an input/output terminal and an input/output circuit or the like described based on common recognition in the technical field of the present disclosure. Further, the input unit 140 may be configured, being integrated with a display unit (for example, a touch panel).

The output unit 150 performs output of data, content and the like in a format perceptible to the user. For example, the output unit 150 may be configured, including the display unit to display an image, a sound output unit to output sound, and the like.

The display unit can be configured with a display device such as a display and a monitor that is described based on common recognition in the technical field of the present disclosure. The sound output unit can be configured with an output device such as a speaker that is described based on common recognition in the technical field of the present disclosure.

The output unit 150 can be configured, including an arithmetic unit, an arithmetic circuit, an arithmetic device, a player, an image/video/sound processing circuit, an image/video/sound processing device, an amplifier and the like described based on common recognition in the technical field of the present disclosure.

Note that any of the communication unit 130, the input unit 140 and the control unit 110 or a combination thereof may be called an acquisition unit. The acquisition unit may acquire an acquired target rating point (TRP) of each advertisement frame or may acquire restriction information about allocation of each advertisement frame (for example, information about prohibited time).

The control unit 110 may perform a process based on the steps shown in Figure. 2. For example, the control unit 110 may decide an advertising material for a particular target to be allocated to each advertisement frame, based on the acquired TRP and the control information. At the time of the decision, the optimization method (simulated annealing or the like) may be used.

For advertisement frames that overlap with a time slot for which it is shown by the control information that it is prohibited to allocate an advertising material for a certain target, the control unit 110 may judge that it is impossible to allocate an advertising material for the target.

For, among the advertisement frames that overlap with the time slot, such an advertisement frame that a ratio of an overlapping part to the advertisement frame is below a certain threshold, the control unit 110 may judge that it is possible to allocate an advertising material for the target.

The control unit 110 may derive virtual time for each advertisement frame, and, for such two advertisement frames that a difference in the virtual time between the advertisement frames is below a certain threshold, judge that it is possible to allocate an advertising material for a certain target to only any one of the advertisement frames (restrict acquisition of an adjacent advertisement frame.

The control unit 110 may derive the virtual time for a certain advertisement frame, based on the number of such advertisement frames that one or both of start time and end time are the same as the advertisement frame.

Each of the broadcast distribution apparatus 20, the audience rating management apparatus 30 and the like may have a configuration similar to the configuration of Figure 8. One skilled in the art can appropriately replace and understand the description related to the allocation apparatus 10 in the explanation of Figure 8.

Some units will be illustratively described below. Note that a reference numeral of a device corresponding to each functional block of Figure 8 is shown by applying a first-digit numeral of a reference numeral indicating the device (for example, in the case of the broadcast distribution apparatus 20, "2" at the first digit of "20") to the first-digit numeral in Figure 8.

A communication unit 230 of the broadcast distribution apparatus 20 may receive control information for broadcasting a CM based on an advertisement manuscript decided with reference to prohibited time and the like, from the allocation apparatus 10. A control unit 210 of the broadcast distribution apparatus 20 may decide a CM to be broadcast in a certain time slot based on the above control information. The communication unit 230 of the broadcast distribution apparatus 20 may distribute (transmit) the CM.

A control unit 310 of the audience rating management apparatus 30 may derive information about an audience rating, TRP and the like based on viewing logs of televisions not shown and transmit the information to the allocation apparatus 10.

(Hardware configuration)

The block diagram used to describe the above embodiment shows blocks according to functions. Each of these functional blocks (components) is realized by an arbitrary combination of hardware and/or software. Further, means for realizing each functional block is not especially limited. Each functional block may be realized by one device that is physically combined or may be realized by two or more devices that are physically separated but are wiredly or wirelessly connected.

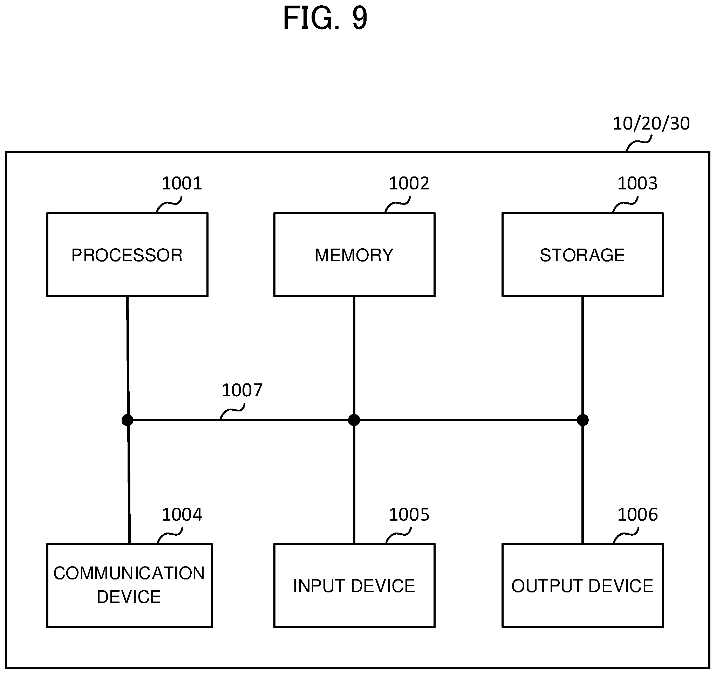

For example, an apparatus (the allocation apparatus 10 or the like) in the embodiment of the present disclosure may function as a computer to perform the process of the advertising material allocation method of the present disclosure. Figure 9 is a diagram showing an example of a hardware configuration of the allocation apparatus and the like according to the embodiment. Physically, each of the allocation apparatus 10, the broadcast distribution apparatus 20 and the like described above may be configured as a computer apparatus including a processor 1001, a memory 1002, a storage 1003, a communication device 1004, an input device 1005, an output device 1006, a bus 1007 and the like.

Note that, in the present disclosure, the terms "apparatus", "circuit", "device", "unit", "server" and the like can be replaced with one another. The hardware configuration of the allocation apparatus 10, the broadcast distribution apparatus 20 and the like may be made so as to include, for each of the devices shown in Figure 11, one or more, or may be configured without including a part of the devices.

For example, though only one processor 1001 is shown, there may be a plurality of processors. Further, a process may be executed by one processor or may be executed by two or more processors at the same time, sequentially, or using other methods. Note that the processor 1001 may be implemented with one or more chips.

Each function of the allocation apparatus 10, the broadcast distribution apparatus 20 and the like is realized by causing certain software (a program) to be read on hardware such as the processor 1001 and the memory 1002, and thereby the processor 1001 performs an arithmetic operation to control communication by the communication device 1004, reading and/or writing of data on the memory 1002 and the storage 1003, and the like.

For example, the processor 1001 causes an operating system to operate and controls the whole computer. The processor 1001 may be configured with a CPU (central processing unit) that includes interfaces with peripheral devices, a control device, an arithmetic operation device, registers and the like. Note that each unit such as the control unit 110 described above may be realized by the processor 1001.

Further, the processor 1001 reads a program (a program code), a software module, data or the like from at least one of the storage 1003 and the communication device 1004 onto the memory 1002 and executes various kinds of processes according thereto. As the program, a program to cause a computer to execute at least a part of the operations described in the above embodiment is used. For example, the control unit 110 may be realized by a control program that is stored in the memory 1002 and operates on the processor 1001, and the other functional blocks may be similarly realized.

The memory 1002 is a computer-readable recording medium and may be configured, for example, with at least one of a ROM (read-only memory), an EPROM (erasable programmable ROM), an EEPROM (electrically EPROM), a RAM (random access memory) and other appropriate storage media. The memory 1002 may be called a register, a cache, a main memory (a main storage device) or the like. The memory 1002 can store a program (a program code), a software module or the like that can be executed to implement the method according to the embodiment.

The storage 1003 is a computer-readable recording medium and may be configured, for example, with at least one of a flexible disk, a floppy (registered trademark) disk, a magneto-optical disk (for example, a compact disc (a CD-ROM (compact disc ROM) and the like), a digital versatile disc and a Blu-ray (registered trademark) disk), a removable disk, a hard disk drive, a smart card, a flash memory device (for example, a card, a stick and a key drive), a magnetic stripe, a database, a server and other appropriate storage media. The storage 1003 may be called an auxiliary storage device. Note that the storage unit 120 described above may be realized by the memory 1002 and/or the storage 1003.

The communication device 1004 is hardware (a transmission/reception device) for performing communication between computers via at least one of a wired network and a wireless network and is also referred to, for example, as a network device, a network controller, a network card, a communication module or the like. The communication device 1004 may include a SIM card. Note that the communication unit 130 described above may be realized by the communication device 1004.

The input device 1005 is an input device (for example, a keyboard, a mouse and the like) to accept an input from outside. The output device 1006 is an output device (for example, a display, a speaker and the like) to perform output to the outside. Note that the input device 1005 and the output device 1006 may be integrally configured (for example, a touch panel). Note that the input unit 140 and the output unit 150 described above may be realized by the input device 1005 and the output device 1006, respectively.

Further, the devices such as the processor 1001 and the memory 1002 are connected via the bus 1008 for communicating information. The bus 1007 may be configured with a single bus or may be configured with different buses among the devices.

Further, each of the allocation apparatus 10 and the like may be configured, including hardware such as a microprocessor, a DSP (digital signal processor), an ASIC (application specific integrated circuit), a PLD (programmable logic device) and an FPGA (field programmable gate array), and a part or all of each functional block may be realized by the hardware. For example, the processor 1001 may be at least one of these pieces of hardware.

(Modification)

Note that the terms described in the present disclosure and/or terms required to understand the present disclosure may be replaced with terms having the same or similar meanings.

The information, parameters and the like described in the present disclosure may be expressed using absolute values, expressed using relative values from certain values, or expressed with corresponding different information. Further, names used for parameters and the like in the present disclosure are not limiting in any respect.

The information, signals and the like described in the present disclosure may be those expressed using any of various different techniques. For example, data, an instruction, a command, information, a signal, a bit, a symbol, a chip and the like that can be mentioned through the whole description above may be indicated by a voltage, a current, an electromagnetic wave, a magnetic field or a magnetic particle, a light field or a photon, or an arbitrary combination thereof.

Information, signals and the like may be inputted/outputted via a plurality of network nodes. The inputted/outputted information, signals and the like may be stored in a particular place (for example, a memory) or managed using tables. For the inputted/outputted information, signals and the like, overwriting, update or addition can be performed. The outputted information, signals and the like may be deleted. The inputted information, signals and the like may be transmitted to other apparatuses.

Further, notification of certain information (for example, a notification of "being X") is not limited to an explicit notification but may be suggestively performed (for example, by not performing notification of the certain information or by notifying different information).

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function and the like no matter whether it is called software, firmware, middleware, a microcode or a hardware description language or it is called by other names.

Further, software, instructions, information and the like may be transmitted/received via at least one of a transmission medium and a signal waveform. For example, when software is transmitted from a website, a server or other remote sources using at least one of wired technology (a coaxial cable, an optical fiber cable, a twisted pair, a DSL (digital subscriber line) and the like) and wireless technology (infrared rays, microwaves and the like), at least one of the wired technology and the wireless technology is included in the definition of a transmission medium.

The terms "system" and "network" used in the present disclosure can be interchangeably used.

The each of the aspects/embodiment described in the present disclosure may be used alone, or the aspects/embodiment may be used in combination or used by being switched at the time of implementation. Further, order of the process procedures, sequences, flowcharts and the like of the aspects/embodiment described in the present disclosure may be changed unless there is a contradiction. For example, the method described in the present disclosure presents various step elements in illustrative order and is not limited to the presented particular order.

The expression "based on" used in the present disclosure does not mean "based on only" unless otherwise stated. In other words, the expression "based on" means both of "based on only" and "at least based on".

Reference to elements using names accompanied by "first", "second" and the like which are used in the present disclosure does not generally limit the quantities or order of the elements. These names can be used in the present disclosure as a convenience method for distinguish two or more elements. Therefore, reference to a first and second elements does not mean that only the two elements can be adopted or that the first element must be prior to the second element in some form.

In the present disclosure, when "include", "including" and forms changed therefrom are used, these words are intended to be inclusive similarly to the term "comprising". Furthermore, the word "or" used in the present disclosure is intended not to be an exclusive OR.

In the present disclosure, for example, when an article is added by translation like "a", "an" and "the" in English, the present disclosure may include a case where nouns following these articles are in plural forms.

An invention according to the present disclosure has been described in detail above. It is apparent to one skilled in the art that the invention according to the present disclosure is not limited to the embodiment described in the present disclosure. The invention according to the present disclosure can be implemented as modified and changed aspects without departing from the spirit and scope of the invention determined based on description of Claims. Therefore, the description of the present disclosure is intended to give an illustrative explanation and does not give any restrictive meaning to the invention according to the present disclosure.

The present application is based on Japanese Patent Application No. 2020-019533 filed on February 7, 2020, the content of which is hereby incorporated in its entirety.

**Claims**

1. An advertising material allocation system comprising:

   an acquisition unit configured to acquire an acquired target rating point (TRP) of each advertisement frame and restriction information about allocation of each advertisement frame; and
   a control unit configured to decide an advertising material for a particular target to be allocated to each advertisement frame, based on the acquired TRP and the restriction information.

2. The advertising material allocation system according to claim 1, wherein, for an advertisement frame that overlaps with a time slot for which it is shown by the restriction information that it is prohibited to allocate an advertising material for a certain target, the control unit judges that it is impossible to allocate an advertising material for the target.

3. The advertising material allocation system according to claim 2, wherein for, among advertisement frames that overlap with the time slot, such an advertisement frame that a ratio of an overlapping part to the advertisement frame is below a certain threshold, the control unit judges that it is possible to allocate an advertising material for the target.

4. The advertising material allocation system according to any of claims 1 to 3, wherein the control unit derives virtual time for each advertisement frame, and, for such two advertisement frames that a difference in the virtual time between the two advertisement frames is below a certain threshold, judges that it is possible to allocate an advertising material for a certain target to only any one of the advertisement frames.

5. The advertising material allocation system according to claim 4, wherein the control unit derives the virtual time for a certain advertisement frame, based on the number of such advertisement frames that one or both of start time and end time are the same as the advertisement frame.

6. An advertising material allocation apparatus comprising:

   an acquisition unit configured to acquire an acquired target rating point (TRP) of each advertisement frame and restriction information about allocation of each advertisement frame; and
   a control unit configured to decide an advertising material for a particular target to be allocated to each advertisement frame, based on the acquired TRP and the restriction information.

7. A program for causing a computer to execute:

   a procedure for acquiring an acquired target rating point (TRP) of each advertisement frame and restriction information about allocation of each advertisement frame; and
   a procedure for deciding an advertising material for a particular target to be allocated to each advertisement frame, based on the acquired TRP and the restriction information.

# FIG. 1

<u>1</u>

# FIG. 2

# FIG. 3

| TARGET | TARGET TRP |
|--------|-----------|
| C | 1500 |
| T | 1000 |
| M1 | 2500 |
| M2 | 1300 |
| M3 | 500 |
| F1 | 2500 |
| F2 | 1200 |
| F3 | 1148 |
| TOTAL AMOUNT | 11648 |

## FIG. 4A

| FRAME ID | BROAD-CASTING STATION | BROAD-CAST DATE | START TIME | END TIME | FRAME CLASSIFI-CATION |
|---|---|---|---|---|---|
| 1 | A STATION | 2019/11/1 | 21:00 | 21:30 | SPOT |
| 2 | A STATION | 2019/11/1 | 21:30 | 22:30 | SPOT |
| 3 | A STATION | 2019/11/1 | 21:30 | 22:30 | SPOT |
| 4 | A STATION | 2019/11/1 | 21:30 | 22:30 | SPOT |
| 5 | A STATION | 2019/11/1 | 21:30 | 22:30 | TIME |
| 6 | A STATION | 2019/11/1 | 21:30 | 22:30 | TIME |

## FIG. 4B

| FRAME ID | BROAD-CASTING STATION | BROAD-CAST DATE | START TIME | END TIME | FRAME CLASSIFI-CATION | TIME LENG-TH | THE NUMBER OF SAME FRAMES | SEQUENCE NUMBER OF SAME FRAMES | VIRTUAL TIME | ADJACENT FRAME ID |
|---|---|---|---|---|---|---|---|---|---|---|
| 1 | A STATION | 2019/11/1 | 21:00 | 21:30 | SPOT | 30 | 1 | 1 | 21:15 | 2 |
| 2 | A STATION | 2019/11/1 | 21:30 | 22:30 | SPOT | 60 | 3 | 1 | 21:40 | 1, 3, 5 |
| 3 | A STATION | 2019/11/1 | 21:30 | 22:30 | SPOT | 60 | 3 | 2 | 22:00 | 2, 4, 5, 6 |
| 4 | A STATION | 2019/11/1 | 21:30 | 22:30 | SPOT | 60 | 3 | 3 | 22:20 | 3, 5, 6 |
| 5 | A STATION | 2019/11/1 | 21:30 | 22:30 | TIME | 60 | 2 | 1 | 21:45 | 2, 3 |
| 6 | A STATION | 2019/11/1 | 21:30 | 22:30 | TIME | 60 | 2 | 2 | 22:15 | 3, 4 |

# FIG. 5

| UNALLOCATED FRAME | TRP | CAMPAIGN A | CAMPAIGN B | CAMPAIGN C |
|---|---|---|---|---|
| 1 | 3.6% | ○ | × | × |
| 2 | 4.2% | ○ | × | ○ |
| 3 | 2.8% | ○ | × | ○ |
| 4 | 6.5% | ○ | × | ○ |
| 5 | 5.5% | ○ | ○ | ○ |

## FIG. 6

| BROAD-CASTING STATION | BROAD-CAST DATE | DAY OF THE WEEK | START TIME | END TIME | GRP | TRP | | | | | | | |
|---|---|---|---|---|---|---|---|---|---|---|---|---|---|
| | | | | | | C | T | M1 | M2 | M3 | F1 | F2 | F3 |
| A STATION | 2019/11/1 | FRIDAY | 05:00 | 05:20 | 1.1 | 0.0 | 0.0 | 0.5 | 0.7 | 2.4 | 0.6 | 0.9 | 1.0 |
| A STATION | 2019/11/1 | FRIDAY | 05:20 | 05:50 | 1.7 | 0.0 | 0.4 | 0.6 | 0.6 | 2.3 | 1.0 | 2.8 | 2.8 |

⋮

| A STATION | 2019/11/1 | FRIDAY | 17:50 | 19:00 | 4.3 | 2.5 | 2.9 | 1.2 | 1.7 | 5.5 | 1.5 | 4.4 | 7.1 |
| A STATION | 2019/11/1 | FRIDAY | 19:00 | 20:54 | 5.3 | 2.8 | 5.0 | 2.2 | 2.9 | 6.0 | 4.5 | 6.3 | 7.4 |

⋮

| A STATION | 2019/11/30 | SATUR-DAY | 26:59 | 27:59 | 0.3 | 0.0 | 0.0 | 0.0 | 0.0 | 1.0 | 0.1 | 0.2 | 0.3 |
| B STATION | 2019/11/1 | FRIDAY | 05:00 | 05:25 | 0.8 | 0.0 | 0.0 | 0.6 | 0.6 | 1.4 | 0.6 | 1.0 | 0.8 |

⋮

| B STATION | 2019/11/30 | SATUR-DAY | 27:35 | 27:45 | 0.8 | 0.0 | 1.9 | 0.0 | 1.6 | 1.4 | 0.6 | 0.8 | 0.4 |

⋮

## FIG. 7

| BROAD-CASTING STATION | BROAD-CAST DATE | DAY OF THE WEEK | START TIME | END TIME | GRP | TRP | | | | | | | |
|---|---|---|---|---|---|---|---|---|---|---|---|---|---|
| | | | | | | C | T | M1 | M2 | M3 | F1 | F2 | F3 |
| A STATION | 2019/11/1 | FRIDAY | 05:00 | 05:20 | 1.1 | * | 0.0 | * | 0.7 | 2.4 | 0.6 | 0.9 | 1.0 |
| A STATION | 2019/11/1 | FRIDAY | 05:20 | 05:50 | 1.7 | * | 0.4 | * | 0.6 | 2.3 | 1.0 | 2.8 | 2.8 |

⋮

| A STATION | 2019/11/1 | FRIDAY | 17:50 | 19:00 | 4.3 | * | 2.9 | * | 1.7 | 5.5 | 1.5 | 4.4 | 7.1 |
|---|---|---|---|---|---|---|---|---|---|---|---|---|---|
| A STATION | 2019/11/1 | FRIDAY | 19:00 | 20:54 | 5.3 | * | 5.0 | 2.2 | 2.9 | 6.0 | 4.5 | 6.3 | 7.4 |

⋮

| A STATION | 2019/11/30 | SATUR-DAY | 26:59 | 27:59 | 0.3 | 0.0 | 0.0 | 0.0 | 0.0 | 1.0 | 0.1 | 0.2 | 0.3 |
|---|---|---|---|---|---|---|---|---|---|---|---|---|---|
| B STATION | 2019/11/1 | FRIDAY | 05:00 | 05:25 | 0.8 | * | 0.0 | * | 0.6 | 1.4 | 0.6 | 1.0 | 0.8 |

⋮

| B STATION | 2019/11/30 | SATUR-DAY | 27:35 | 27:45 | 0.8 | 0.0 | 1.9 | 0.0 | 1.6 | 1.4 | 0.6 | 0.8 | 0.4 |
|---|---|---|---|---|---|---|---|---|---|---|---|---|---|

⋮

# FIG. 8

CONTROL UNIT — 110

STORAGE UNIT — 120

COMMUNICATION UNIT (ACQUISITION UNIT) — 130

INPUT UNIT (ACQUISITION UNIT) — 140

OUTPUT UNIT — 150

10

EP 4 102 436 A1

# FIG. 9

10/20/30

EP 4 102 436 A1

**INTERNATIONAL SEARCH REPORT**

| International application No. |
| --- |
| PCT/JP2021/003211 |

A. CLASSIFICATION OF SUBJECT MATTER
G06Q 30/02(2012.01)i
FI: G06Q30/02 380

According to International Patent Classification (IPC) or to both national classification and IPC

B. FIELDS SEARCHED

Minimum documentation searched (classification system followed by classification symbols)
G06Q30/02

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2003-178230 A (FUJITSU LTD.) 27 June 2003 (2003-06-27) paragraphs [0026]-[0075], fig. 1-13 | 1-3, 6-7 |
| X | 大西浩志, テレビ番組 CM の割付に対する数理的アプローチ, オペレーションズ・リサーチ, 01 March 2005, vol. 50, no. 3, pp. 151-158, in particular, page 154, left column, line 7 to page 157, right column, line 1, non-official translation (ONISHI, Hiroshi, "Mathematical approach to the allocation of TV commercials", Communications of the Operations Research Society of Japan) | 1-2, 6-7 |
| A | JP 2018-55276 A (SHARP CORP.) 05 April 2018 (2018-04-05) entire text, all drawings | 1-7 |
| A | JP 2012-234120 A (MITSUBISHI ELECTRIC CORP.) 29 November 2012 (2012-11-29) entire text, all drawings | 1-7 |

☐ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 April 2021 (07.04.2021) | 20 April 2021 (20.04.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2021/003211 |

| Patent Documents referred in the Report | Publication Date | Patent Family | Publication Date |
| --- | --- | --- | --- |
| JP 2003-178230 A | 27 Jun. 2003 | (Family: none) | |
| JP 2018-55276 A | 05 Apr. 2018 | US 2018/0091841 A1 entire text, all drawings CN 107871173 A | |
| JP 2012-234120 A | 29 Nov. 2012 | (Family: none) | |

Form PCT/ISA/210 (patent family annex) (January 2015)

**REFERENCES CITED IN THE DESCRIPTION**

**Patent documents cited in the description**

- JP 2000124867 A
- JP 2020019533 A